# EUROPEAN PATENT APPLICATION

(11) **EP 2 508 323 A1**
(43) Date of publication of application: **10.10.2012**
(21) Application number: 12250078.8
(22) Date of filing: 29.03.2012
(51) Int. Cl.: B29C 45/76, B29C 45/80, B29C 45/56

(54) **Injection moulding**

(30) Priority: 08.04.2011 GB 201106076
(71) Applicant: RPC Containers Limited, Rushden Northamptonshire NN106FB (GB)
(72) Inventor: Malik, Khalid M., Leicester LE5 5NN (GB)
(74) Representative: Stevens, Jason Paul

(57) **Abstract**

In an injection moulding process, the mould parts can be moved relative to each other (separation of the mould parts shown as line 50). Injection starts as the mould parts are being moved towards each other (injection pressure shown as line 60). The movement of the mould parts stops briefly as injection is completed, and the mould parts are then fully closed.

## Description

The present invention relates to a method of injection moulding of plastic, and in particular to a method in which molten plastic is injected into a mould as the mould is closing.

Injection moulding is a very well-known method of forming articles from plastics. In a standard injection moulding process, molten plastic is injected into a mould cavity formed between two mould halves, where it cools and hardens into the shape of the cavity.

The standard process has certain disadvantages when used to form certain types of articles. For example, if the article to be formed has long thin parts, the injection pressure must be sufficient to force the molten plastic into the long thin parts of the mould cavity before the molten material solidifies. In turn, this high injection pressure will tend to force the mould halves apart, and so the clamping force needed to hold the mould halves together during injection must be increased. This increases the power requirements and thus the overall costs of the process.

A variant of the standard process, which is more suitable for forming articles with long thin parts, is injection compression moulding. In this process, the mould halves are brought close together, but are not completely closed. Molten material is injected into the open mould, and the mould halves are then clamped together. As the mould halves approach each other, the molten material is forced into the long thin parts of the cavity. Thus, the clamping force does not need to be sufficient to withstand the tendency of the injection pressure to push the mould halves apart, and the power requirements and cost of the procedure can be reduced.

However, the entire charge of plastic material is injected into the mould while it is open. Whilst injection moulding can be a very fast process, the injection of the entire charge takes a certain amount of time to complete, and during this time the first parts of the material to be injected are in contact with the mould parts, and cooling as a result of this contact. As it is necessary for the plastic to remain sufficiently fluid for it to take up the shape of the mould when the mould parts are moved towards each other at the end of the injection, it may be necessary to increase the temperature of the injected material, or provide some means of heating the mould to prevent unwanted solidification from occurring before the mould is closed. This can also, increase power requirements and costs.

According to a first aspect of the present invention, there is provided a method for moulding articles from molten plastic material or the like in a two-part mould, the parts of which can be moved towards and away from each other, comprising the steps of:
1) moving the mould parts towards each other;
2) while the mould parts are approaching each other, commencing injection of molten plastics material into the mould;
3) pausing the motion of the mould parts for a brief period while injection of molten plastics material into the mould continues;
4) completing injection of molten plastics material into the mould;
5) moving the mould parts towards each other into their closed position;
   and
6) maintaining the mould parts in their closed position while the molten plastics material cools and solidifies.

As the molten plastic is injected into the mould while it is closing, the overall cycle time can be reduced (as mould closing can take place at the same time as injection). Even a very small decrease in cycle time can lead to a significant improvement in output over the entire life of the process.

Further, injecting molten plastic into an open mould is easier than injecting into a closed mould. Thus, the viscosity of the molten plastic can be lower, and the molten plastic can be delivered at a lower temperature, which reduces the heating requirements and thus the overall power requirements.

In addition, as the plastic can be injected at a lower temperature, less cooling of the plastic required in order for it to solidify. Therefore, less cooling of the mould is required, which again reduces overall power requirements and leads to a reduced cycle time.

A preferred embodiment of the present invention will now be described by way of example only with reference to the accompanying drawings, in which:
Fig. 1 is a graph showing various parameters in a standard injection moulding process; and
Fig. 2 is a graph showing parameters during a preferred embodiment of the process of the present invention.

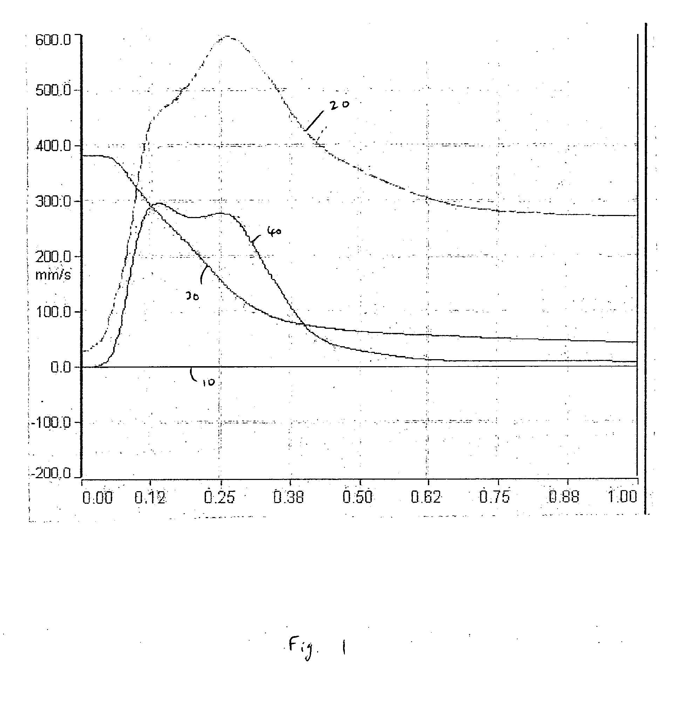

Figure 1 is a graph showing the variation in time (measured along the x-axis in seconds) of four parameters during a conventional injection moulding process. Specifically, the graph shows variation in mould part separation (line 10), injection pressure (line 20), injection screw displacement (line 30), and injection screw speed (line 40).

As this is a conventional injection moulding process, in which molten plastic material is injected into a closed mould, the mould part separation (line 10) is 0 at all times during the process.

As the process starts, injection pressure (line 20) starts to increase. This leads to motion of the injection screw, shown by a decreasing injection screw displacement in line 30 and an increasing screw speed in line 40 at around 0.05 seconds. As the mould cavity fills with injected molten plastics material, the pressure rises, and the screw continues to move forward and accelerates in order to overcome this pressure.

When the mould cavity is nearly full, the pressure maximises (at around 0.26 seconds). At this point, the screw speed is falling, and the screw is close to its final position. The screw continues to move forward slowly as the molten material cools and solidifies.

The later steps of ejecting the cooled and solidified article from the mould are not shown.

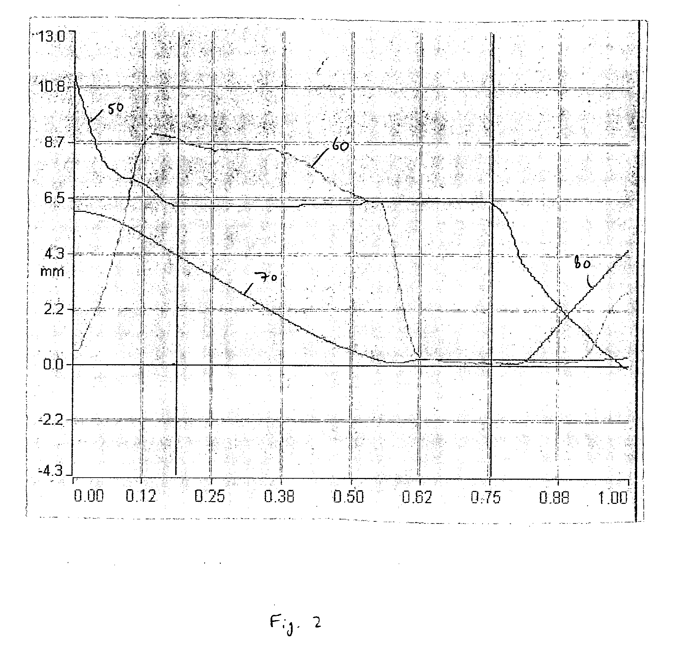

Figure 2 is a graph showing the variation in time (measured along the x-axis in seconds) of four parameters during a preferred embodiment of the moulding process of the invention. Again, the graph shows variation in mould part separation (line 50), injection pressure (line 60) and injection screw displacement (line 70), and this time also shows mould clamping force (line 80). The y-axis is scaled in millimetres and shows mould part separation.

Injection commences at t = 0 (the start of the process). At this point in time, the mould parts are separated by about 11 mm (see line 50 at its intersection with the y-axis); however, as can be seen by the slope of the line, the mould parts are already moving towards each other at t = 0 (in other words, motion of the mould parts towards each other starts before the injection starts).

Although this description will refer to "motion of the mould parts towards each other", in practice, one mould part will be stationary while the other is pushed towards it.

As injection commences at t = 0, injection pressure (line 60) increases, and injection screw displacement (line 70) decreases.

For around 0.18 seconds, molten plastics is injected into the mould while it is closing (as shown by the decreasing mould part separation in line 50).

Then (in this embodiment at t = 0.18), motion of the mould parts towards each other is stopped, so that line 50 becomes almost horizontal (with, in this case, a mould part separation of around 6.2 mm). However, injection of molten plastics material continues, as shown by the displacement of the injection screw (line 70).

At about t = 0.55 seconds the screw is fully forwards (so that the full charge of molten material has been injected), and the injection pressure drops to nearly zero. There is a small delay.

At t = 0.75 seconds, motion of the mould parts towards each other resumes. The mould parts are pushed towards each other for 0.25 seconds, and the mould is fully closed at t = 1 second. As can be seen from line 80, the clamping force rises from zero as the mould closes.

As with the conventional process, the mould is held closed while the molten material cools and solidifies. Again, the later steps of ejecting the cooled and solidified article from the mould are not shown.

Thus, it will be seen that there is a pause in the motion of the mould parts towards each other, and injection of the charge of molten plastic is completed during this pause. The length of the pause can be varied depending on the process requirements; however, if the pause is too long, it has been found that gravity starts to affect the molten material, which tends to run to the lower part of the mould cavity. This can lead to an unacceptable product. For this reason, the mould parts should be stationary for no longer than one second.

Further, it would be preferable for this pause period to be as short as possible, in order to reduce the cycle time. It will be appreciated that an injection moulding process is repeated a great many times, and so even a very slight reduction in cycle times (such as the reduction achieved by having the injection take place simultaneously with the mould closing) can have a significant effect on the overall productivity.

In the extreme case, it is possible for the pause period to be zero; in other words, the motion of the mould parts towards each other slows down, but does not actually stop. The specific details of timing and so forth can of course be varied depending on the exact specifications of the moulded product to be produced by the process.

## Claims

1. A method for moulding articles from molten plastic material or the like in a two-part mould, the parts of which can be moved towards and away from each other, comprising the steps of:
1) moving the mould parts towards each other;
2) while the mould parts are approaching each other, commencing injection of molten plastics material into the mould;
3) pausing the motion of the mould parts for a brief period while injection of molten plastics material into the mould continues;
4) completing injection of molten plastics material into the mould;
5) moving the mould parts towards each other into their closed position;
and
6) maintaining the mould parts in their closed position while the molten plastics material cools and solidifies.

2. A method as claimed in claim 1, wherein the brief period during which the motion of the mould parts is paused is no more than 1 second.

3. A method as claimed in claim 1 or claim 1, wherein the brief period is zero seconds.
